# EUROPÄISCHE PATENTANMELDUNG

(11) **EP 1 170 180 A1**
(43) Veröffentlichungstag der Anmeldung: **09.01.2002**
(21) Anmeldenummer: 00114712.3
(22) Anmeldetag: 08.07.2000
(51) Int. Cl.: B60R 25/00

(54) **Diebstahlsicherungssystem für Automobile**

(71) Anmelder: Chin-Chuan Tu, Taichung City, Taiwan, R.O.C. (TW)
(72) Erfinder: Chin-Chuan Tu, Taichung City, Taiwan, R.O.C. (TW)
(74) Vertreter: Patent- und Rechtsanwaltssozietät, Maucher, Börjes & Kollegen

(57) **Zusammenfassung**

Ein Diebstahlsicherungssystem für ein Automobil umfaßt eine längliche Gleitbahn, welche an einem Fahrersitz eines Automobils angebracht ist, einen Sitz, welcher auf der Gleitbahn verschiebbar angebracht ist, einen Sitzmotor, welcher an der Gleitbahn angebracht ist, zum Antreiben des Sitzes, um auf der Gleitbahn hin- und herzubewegt zu werden, einen Reduktionsgetriebesatz, welcher mit dem Sitzmotor zusammenwirkt, um den Sitz zu bewegen, und eine Sitzbewegungssteuerungsvorrichtung zumBetätigen des Sitzmotors, damit sichdieser dreht, und umfassend einen Empfänger, eine Zentraleinheit, einen Decodierer, ein Betätigungsglied und einen Motordrehungssteuerkreis. Der Motordrehungssteuerkreis ist mit dem Sitzmotor zum Drehen des Sitzmotors elektrisch verbunden, und die Sitzbewegungssteuerungsvorrichtung ist mit einer Stromversorgung mittels einer Batterie versehen und wirkt mit einem Emitter zusammen. Auf diese Weise betätigt, wenn der Empfänger ein Signal, welches vom Emitter geliefert wird, empfängt, der Motordrehungssteuerkreis der Sitzbewegungsteuerungsvorrichtung den Sitzmotor, damit sich dieser positiv dreht, um den Sitz auf der Gleitbahn zu einem vorderen Ende des Fahrersitzes zu bewegen und dadurch einen Fußraum des Fahrersitzes zu blockieren und zu verschließen, so daß ein Autodieb nicht auf ein Pedal des Fahrersitzes treten kann.

## Beschreibung

### GEBIET DER ERFINDUNG

Die vorliegende Erfindung betrifft ein Diebstahlsicherungssystem und insbesondere ein Diebstahlsicherungssystem für ein Automobil.

### BESCHREIBUNG DES STANDES DER TECHNIK

Ein herkömmliches Diebstahlsicherungssystem für ein Kraftfahrzeug umfaßt dem Stand der Technik entsprechend ein Schloß, welches am Lenkrad oder am Schalthebel des Autos angebracht wird, so daß das Lenkrad oder der Schalthebel arretiert werden und nicht bewegt werden können, wodurch eine Diebstahlssicherungsfunktion erzielt wird.

Eine herkömmliche Diebstahlsicherungsvorrichtung für den Fahrersitz eines Autos umfaßt gemäß dem Stand der Technik einen beweglichen Sitz, welcher zum vorderen Ende des Fahrersitzes hin bewegt werden kann, um den Fußraum des Fahrersitzes zu blockieren, so daß ein Autodieb nicht auf das Kupplungspedal, das Bremspedal oder das Gaspedal des Fahrersitzes treten kann. Ein Schloß kann verwendet werden, um den Sitz zu sichern, wenn der Sitz zu seinem vorderen Ende bewegt wurde, wodurch eine Diebstahlsicherungsfunktion wirksam erzielt wird. Allerdings muß der Benutzer den Sitz nach vorne schieben und daraufhin den Sitz mit Hilfe des Schlosses händisch verriegeln, was für den Benutzer, welcher somit Mühe verschwendet, unbequem ist. Zudem ist das Schloß freiliegend außerhalb des Sitzes, so daß das Schloß vom Dieb einfach aufgebrochen werden kann, was die Diebstahlsicherungswirkung beträchtlich vermindert.

### Gegenstand der Erfindung:

Die vorliegende Erfindung entstand, um den Nachteil der herkömmlichen Diebstahlsicherungsvorrichtung für ein Kraftfahrzeug zu reduzieren und/oder zu verhindern.

Gemäß einem Aspekt der vorliegenden Erfindung wird ein Diebstahlsicherungssystem für ein Automobil vorgesehen, umfassend: eine längliche Gleitbahn, welche am Fahrersitz eines Automobils angebracht ist; einen Sitz, welcher auf der Gleitbahn verschiebbar angebracht ist; einen Sitzmotor, welcher an der Gleitbahn angebracht ist, zum Antreiben des Sitzes, damit sich dieser auf der Gleitbahn hin- und herbewegt; einen Reduktionsgetriebesatz, welcher an der Gleitbahn angebracht ist und mit dem Sitzmotor zusammenwirkt, um den Sitz zu bewegen; und eine Sitzbewegungssteuerungsvorrichtung, welche im Automobil angebracht ist, zum Antreiben des Sitzmotors, damit sich dieser dreht, und welche einen Empfänger, eine Zentraleinheit, einen Decodierer, ein Betätigungsglied und einen Motordrehungssteuerkreis umfaßt. Die Sitzbewegungssteuerungsvorrichtung ist vorzugsweise mit einer Stromversorgung mittels einer Batterie versehen und ausgebildet, um mit einem Emitter zusammenzuwirken. Der Motordrehungssteuerkreis der Sitzbewegungssteuerungsvorrichtung kann zum Drehen des Sitzmotors mit dem Sitzmotor elektrisch verbunden werden.

Mittels einer derartigen Anordnung ist, wenn der Empfänger das Signal empfängt, welches vom Emitter über die Ferne geliefert wird, der Motordrehungssteuerkreis der Sitzbewegungssteuerungsvorrichtung ausgebildet, um den Sitzmotor zu betätigen, damit sich dieser positiv dreht, um dadurch den Sitz auf der Gleitbahn zu einem vorderen Ende des Fahrersitzes zu bewegen, wodurch ein Fußraum des Fahrersitzes blockiert und verschlossen wird, so daß ein Autodieb nicht auf ein Pedal des Fahrersitzes treten kann.

Ein Lenkrad ist schwenkbar im Automobil angebracht, und ein Lenkradmotor und ein Reduktionsgetriebesatz sind im Automobil angebracht, um das Lenkrad zu steuern, damit dieses in die in bezug auf den Sitz entgegengesetzte Richtung geschwenkt wird. Vorzugsweise ist der Lenkradmotor elektrisch am Motordrehungssteuerkreis angeschlossen, so daß, wenn der Sitz nach vorne bewegt wird, das Lenkrad synchron dazu nach unten geschwenkt wird, wodurch der Fußraum des Fahrersitzes des in noch größerem Maße blockiert und verschlossen wird.

Weitere Vorzüge und Vorteile der vorliegenden Erfindung werden nach eingehender Lektüre der ausführlichen Beschreibung unter geeigneter Bezugnahme auf die beiliegenden Zeichnungen klar ersichtlich sein.

### Kurze Beschreibung der Zeichnungen:

- Fig. 1: ist eine teilweise vergrößerte schematische Ansicht eines Diebstahlsicherungssystems für ein Automobil gemäß der vorliegenden Erfindung;
- Fig. 2: ist eine Ansicht des aktivierten Diebstahlsicherungssystems aus Fig. 1;
- Fig. 3: ist ein Flußdiagramm einer Sitzbewegungssteuerungsvorrichtung des Diebstahlsicherungssystems aus Fig. 1;
- Fig. 4: ist ein Flußdiagramm einer Sitzbewegungssteuerungsvorrichtung des Diebstahlsicherungssystems aus Fig. 1 gemäß einer anderen Ausführungsform der vorliegenden Erfindung;
- Fig. 5: ist eine schematische praxisbezogene Ansicht des Diebstahlsicherungssystems aus Fig. 1; und
- Fig. 6: ist eine Ansicht des aktivierten Diebstahlsicherungssystems aus Fig. 5.

### Ausführliche Beschreibung der Erfindung:

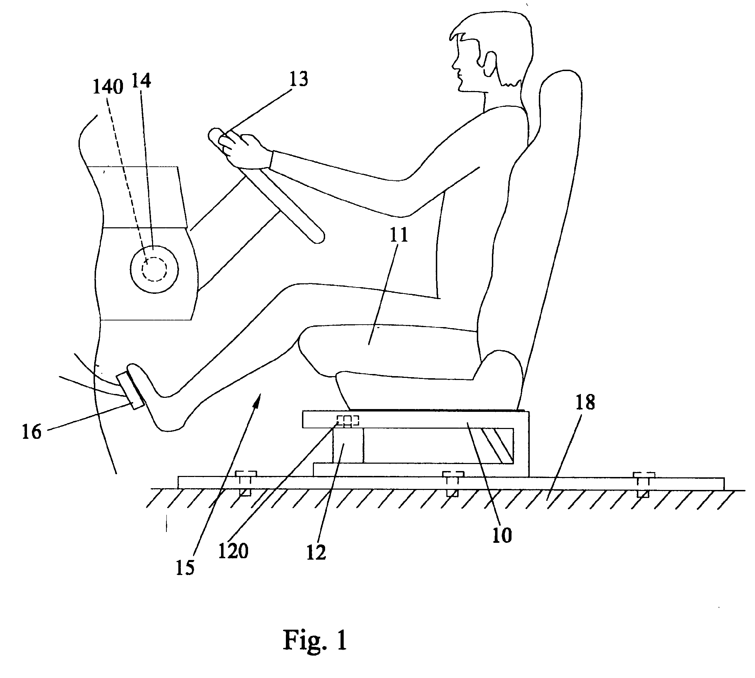

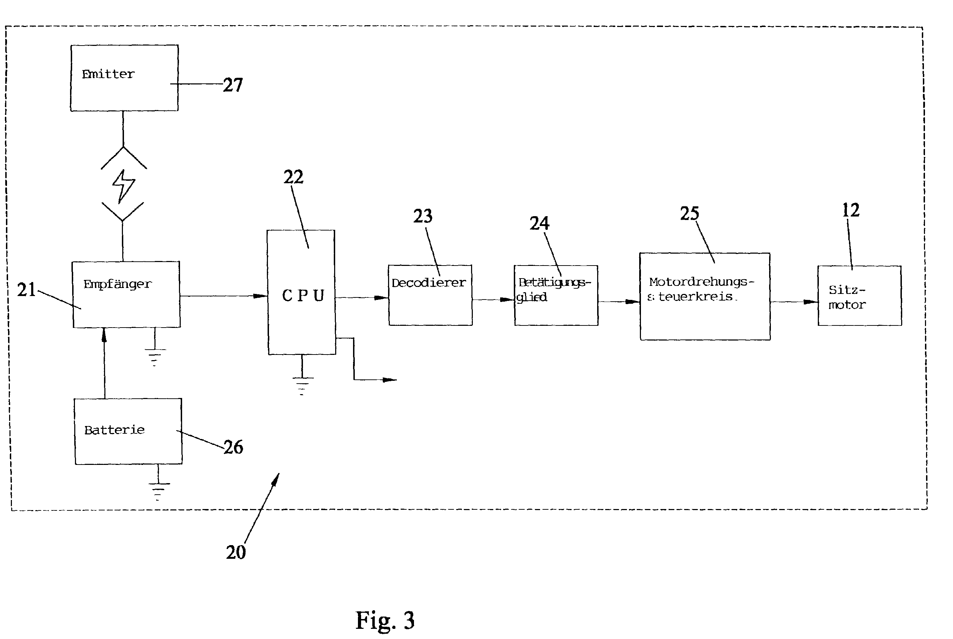

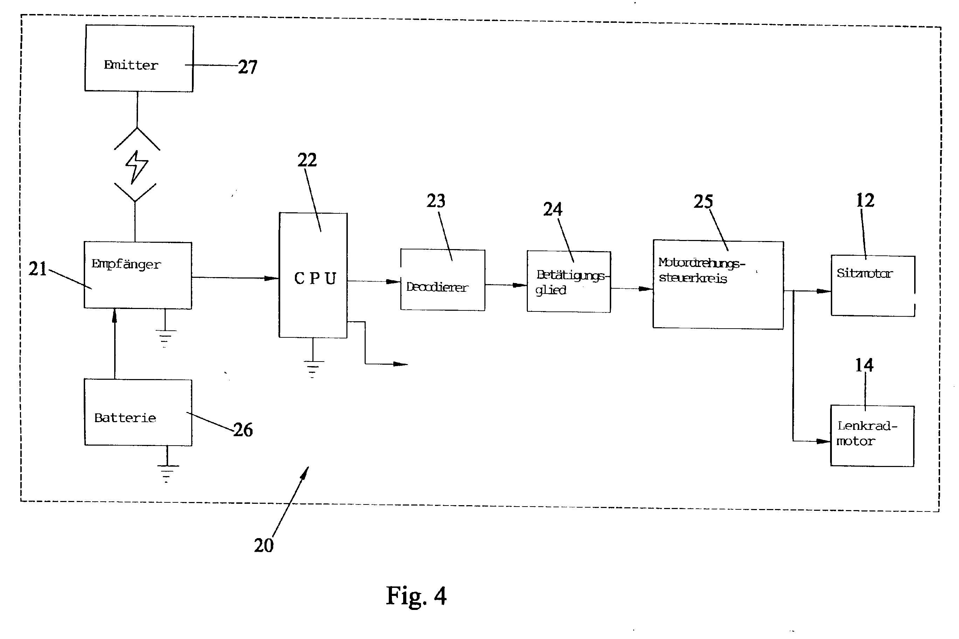

Mit Bezugnahme auf die Zeichnungen und vorerst auf Fig. 1-4 umfaßt ein Diebstahlsicherungssystem für ein Automobil gemäß der vorliegenden Erfindung eine längliche Gleitbahn 10, welche an einem Fahrersitz 18 eines Automobils angebracht ist, einen Sitz 11, welcher an der Gleitbahn 10 verschiebbar angebracht ist, einen Sitzmotor 12, welcher an der Gleitbahn 10 zum Antreiben des Sitzes 11 angebracht ist, um diesen auf der Gleitbahn 10 hin- und her zu bewegen, einen Reduktionsgetriebesatz 120, welcher an der Gleitbahn 10 angebracht ist und mit dem Sitzmotor 12 zusammenwirkt, um den Sitz 11 zu bewegen, und eine Sitzbewegungssteuerungsvorrichtung 20, welche im Automobil unter dem Sitz 11 angebracht ist, zum Betätigen des Sitzmotors 12, damit sich dieser dreht.

Die Sitzbewegungssteuerungsvorrichtung 20 umfaßt einen Empfänger 21, eine Zentraleinheit (CPU) 22, einen Decodierer 23, ein Betätigungsglied 24 und einen Motordrehungssteuerkreis 25, wobei der Motordrehungssteuerkreis 25 zum Drehen des Sitzmotors 12 elektrisch an den Sitzmotor 12 angeschlossen ist.

Die Sitzbewegungssteuerungsvorrichtung 20 ist mit einer Stromversorgung mittels einer Batterie 26 versehen, und der Empfänger 21 der Sitzbewegungssteuerungsvorrichtung 20 ist ausgebildet, um mit einem Emitter 27 zusammenzuwirken.

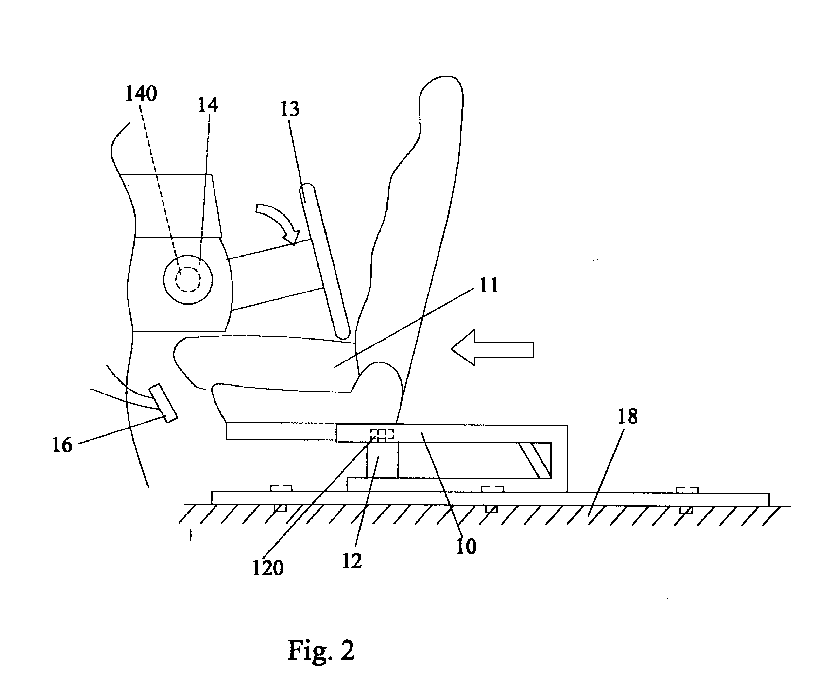

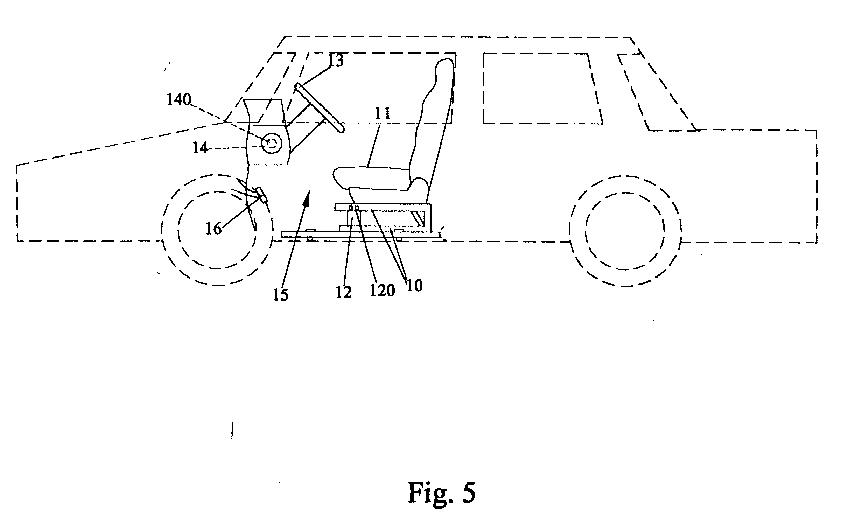

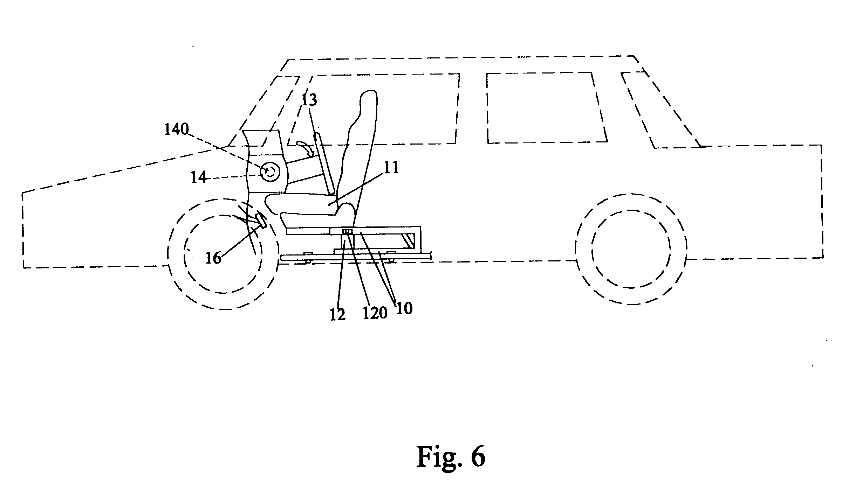

Bezugnehmend auf Fig. 1-6 kann der Lenker in der Praxis, wenn dieser aus dem Auto aussteigt, auf den Emitter 27 drücken, um ein Signal an den Empfänger 21 fernzuübertragen. Wenn der Empfänger 21 das Signal, welches vom Emitter 27 ferngesendet wird, empfängt, so ist der Motordrehungssteuerkreis 25 der Sitzbewegungssteuerungsvorrichtung 20 ausgebildet, den Sitzmotor 12 positiv zu drehen, um dadurch den Sitz 11 auf der Gleitbahn 10 aus der in Fig. 1 und 5 dargestellten Position in die in Fig. 2 und 6 dargestellte Position zu bewegen, so daß der Sitz 11 zum vorderen Ende des Fahrersitzes 18 hin verschoben wird und dadurch den Fußraum 15 des Fahrersitzes 18 zur Gänze blockiert und verschließt, so daß ein Autodieb nicht auf das Pedal 16 des Fahrersitzes 18 treten kann, wodurch eine Diebstahlsicherungsfunktion erzielt wird. Das Pedal 16 kann ein Kupplungspedal, ein Bremspedal oder ein Gaspedal sein.

Andererseits ist ein Lenkrad 13 schwenkbar im Automobil angebracht. Ein Lenkradmotor 14, welcher mit einem Reduktionsgetriebesatz 140 zusammenwirkt, ist im Automobil angebracht, um das Lenkrad 13 zu steuern, damit dieses in die in bezug auf den Sitz 11 entgegengesetzte Richtung geschwenkt wird. Der Lenkradmotor 14 ist mit dem Motordrehungssteuerkreis 25 elektrisch verbunden, so daß, wenn der Sitz 11 nach vorne bewegt wird, der Lenkradmotor 14 vom Motordrehungssteuerkreis 25 positiv gedreht wird, um das Lenkrad 13 zu schwenken, so daß das Lenkrad 13 synchron dazu nach unten geschwenkt werden kann, wenn der Sitz 11 nach vorne bewegt wird, wodurch der Fußraum 15 des Fahrersitzes 18 in noch größerem Maße blockiert und verschlossen wird.

Wie aus Fig. 1 und 5 zu ersehen ist, ist bei normalem Gebrauch der Fußraum 15 des Fahrersitzes 18 ausreichend groß, um die Beine des Lenkers zum Bedienen des Pedals 16, beispielsweise eines Kupplungspedals, Bremspedals oder Gaspedals, aufzunehmen.

Wie aus Fig. 2 und 6 zu ersehen ist, kann der Fahrzeuglenker, wenn er aus dem Fahrzeug aussteigt, auf den Emitter 27 drücken, um ein Abschaltsignal an den Empfänger 21 fernzuübertragen. Wenn der Empfänger 21, welcher am Kraftfahrzeug angebracht ist, das Signal vom Emitter 27 empfängt, wird das Signal von der CPU 22 und dem Decodierer 23 verarbeitet, um das Betätigungsglied 24 anzutreiben, welches den Motordrehungssteuerkreis 25 steuert, welcher daraufhin den Sitzmotor 12 und den Lenkradmotor 14 betätigt, damit sich diese positiv drehen, so daß der Sitz 11 auf der Gleitbahn 10 nach vorne bewegt werden kann und das Lenkrad 13 synchron dazu nach unten geschwenkt werden kann, wenn der Sitz 11 nach vorne bewegt wird, wodurch der Fußraum 15 des Fahrersitzes 18 zur Gänze blockiert und verschlossen wird. Der Sitzmotor 12 und der Lenkradmotor 14 hören daraufhin auf, sich zu drehen, sobald der Fußraum 15 des Fahrersitzes 18 zur Gänze blockiert ist. Gleichzeitig werden der Sitzmotor 12 durch den Reduktionsgetriebesatz 120 und der Lenkradmotor 14 durch den Reduktionsgetriebesatz 140 verriegelt, so daß der Autodieb nicht ohne weiteres den Sitz 11 und das Lenkrad 13 in ihre ursprüngliche Lage schieben kann, wodurch eine Diebstahlsicherungsfunktion erzielt wird.

Demnach weist das Diebstahlsicherungssystem gemäß der vorliegenden Erfindung die folgenden Vorteile auf.

Der Fahrzeuglenker muß lediglich auf den Taster des Emitters drücken, um den Sitz zu bewegen oder das Lenkrad zu schwenken, um den Fußraum des Fahrersitzes zu blockieren, wodurch der Betrieb des Diebstahlsicherungssystems erleichtert wird.

Darüber hinaus muß der Fahrzeuglenker lediglich auf den Taster des Emitters drücken, um den Öffnungs- und Schließvorgang zu steuern, ohne den Sitz händisch anschieben zu müssen, wie für die herkömmliche Vorrichtung offenbart wurde, wodurch sich der Benutzer einige Mühe erspart.

Des weiteren muß der Fahrzeuglenker lediglich auf den Taster des Emitters drücken, um den Öffnungs- und Schließvorgang zu steuern, ohne ein Schloß montieren zu müssen, wie für die herkömmliche Vorrichtung offenbart wurde, was den Gebrauch des Diebstahlsicherungssystems erleichtert.

Weiters können der Sitzmotor und die Sitzbewegungssteuerungsvorrichtung, welche unter dem Sitz verborgen sind, eine Verriegelungswirkung vorsehen, derart, daß diese vom Autodieb nicht einfach zu finden oder zu knacken sind, wodurch die Diebstahlsicherungsfunktion verstärkt wird.

Weiters ist, wie aus Fig. 1 und 2 hervorgeht, die Gleitbahn an der Fahrzeugkarosserie durch Bolzen festgemacht, derart, daß, wenn der Sitz nach vorne bewegt wird, die Bolzen vom Sitz verdeckt werden, so daß der Sitz überhaupt nicht demontiert werden kann, wodurch die Diebstahlsicherungsfunktion weiter verbessert wird.

Es sollte einschlägig versierten Fachleuten klar sein, daß weitere Ausführungsformen realisiert werden können, ohne vom Umfang der vorliegenden Erfindung abzuweichen.

Zusammenfassend läßt sich folgendes feststellen: Ein Diebstahlsicherungssystem für ein Automobil umfaßt eine längliche Gleitbahn, welche an einem Fahrersitz eines Automobils angebracht ist, einen Sitz, welcher auf der Gleitbahn verschiebbar angebracht ist, einen Sitzmotor, welcher an der Gleitbahn angebracht ist, zum Antreiben des Sitzes, um auf der Gleitbahn hin- und herzubewegt zu werden, einen Reduktionsgetriebesatz, welcher mit dem Sitzmotor zusammenwirkt, um den Sitz zu bewegen, und eine Sitzbewegungssteuerungsvorrichtung zum Betätigen des Sitzmotors, damit sich dieser dreht, und umfassend einen Empfänger, eine Zentraleinheit, einen Decodierer, ein Betätigungsglied und einen Motordrehungssteuerkreis. Der Motordrehungssteuerkreis ist mit dem Sitzmotor zum Drehen des Sitzmotors elektrisch verbunden, und die Sitzbewegungssteuerungsvorrichtung ist mit einer Stromversorgung mittels einer Batterie versehen und wirkt mit einem Emitter zusammen. Auf diese Weise betätigt, wenn der Empfänger ein Signal, welches vom Emitter geliefert wird, empfängt, der Motordrehungssteuerkreis der Sitzbewegungsteuerungsvorrichtung den Sitzmotor, damit sich dieser positiv dreht, um den Sitz auf der Gleitbahn zu einem vorderen Ende des Fahrersitzes zu bewegen und dadurch einen Fußraum des Fahrersitzes zu blockieren und zu verschließen, so daß ein Autodieb nicht auf ein Pedal des Fahrersitzes treten kann.

## Patentansprüche

1. Diebstahlsicherungssystem für ein Automobil, umfassend:
eine längliche Gleitbahn (10), welche an einem Fahrersitz (18) eines Automobils angebracht ist;
einen Sitz (11), welcher auf der Gleitbahn (10) verschiebbar angebracht ist;
einen Sitzmotor (12), welcher an der Gleitbahn (10) zum Antreiben des Sitzes (11) angebracht ist, damit dieser auf der Gleitbahn (10) hin- und herbewegt wird;
einen Reduktionsgetriebesatz (120), welcher an der Gleitbahn (10) angebracht ist und mit dem Sitzmotor (12) zusammenwirkt, um den Sitz (11) zu bewegen; und
eine Sitzbewegungssteuerungsvorrichtung (20), welche im Automobil angebracht ist, zum Betätigen des Sitzmotors (12), damit sich dieser dreht, und welche einen Empfänger (21), eine Zentraleinheit (22), einen Decodierer (23), ein Betätigungsglied (24) und einen Motordrehungssteuerkreis (25) umfaßt, wobei der Motordrehungssteuerkreis (25) mit dem Sitzmotor (12) zum Drehen des Sitzmotors (12) elektrisch verbunden ist, wobei die Sitzbewegungssteuerungsvorrichtung (20) mit einer Stromversorgung durch eine Batterie (26) versehen ist und mit einem Emitter (27) zusammenwirkt,
wobei, wenn der Empfänger (21) ein Signal empfängt, welches vom Emitter (27) über die Ferne geliefert wird, der Motordrehungssteuerkreis (25) der Sitzbewegungssteuerungsvorrichtung (20) ausgebildet ist, um den Sitzmotor (12) zu betätigen, damit sich dieser positiv dreht, um dadurch den Sitz (11) auf der Gleitbahn (10) zu einem vorderen Ende des Fahrersitzes (18) zu bewegen, wodurch ein Fußraum (15) des Fahrersitzes (18) blockiert und verschlossen wird, so daß ein Autodieb nicht auf ein Pedal (16) des Fahrersitzes (18) treten kann.

2. Diebstahlsicherungssystem nach Anspruch 1, des weiteren umfassend ein Lenkrad (13), welches im Automobil schwenkbar angebracht ist, wobei ein Lenkradmotor (14) im Automobil zum Steuern des Lenkrades (13) angebracht ist, damit dieses in die in bezug auf den Sitz (11) entgegengesetzte Richtung geschwenkt wird.

3. Diebstahlsicherungssystem nach Anspruch 2, des weiteren umfassend einen Reduktionsgetriebesatz (140), welcher mit dem Lenkradmotor (14) zusammenwirkt, um das Lenkrad (13) zu schwenken.

4. Diebstahlsicherungssystem nach Anspruch 2, wobei der Lenkradmotor (14) mit dem Motordrehungssteuerkreis (25) elektrisch verbunden ist, so daß, wenn der Sitz (11) nach vorne bewegt wird, das Lenkrad (13) synchron dazu nach unten geschwenkt wird und dadurch den Fußraum (15) des Fahrersitzes (18) in noch größerem Maß blockiert und verschließt.
